# EUROPEAN PATENT SPECIFICATION

(11) **EP 2 330 684 B1**
(45) Date of publication and mention of the grant of the patent: **27.03.2013**
(21) Application number: 09811465.5
(22) Date of filing: 31.08.2009
(51) Int. Cl.: H01Q 1/24, G06K 19/07, G06K 19/077, H01Q 1/38, H01Q 5/01, H01Q 9/16, H01Q 9/42, H04B 1/59, H04B 5/02, H01Q 1/22

(54) **RFID TAG, RFID TAG SET AND RFID SYSTEM**
RFID-ETIKETT, RIFID-ETIKETTENSATZ UND RFID-SYSTEM
ÉTIQUETTE RFID, JEU D'ÉTIQUETTES RFID ET SYSTÈME RFID

(30) Priority: 05.09.2008 JP 2008228819
(43) Date of publication of application: 08.06.2011
(73) Proprietor: Omron Corporation, Kyoto-shi, Kyoto 600-8530 (JP)
(72) Inventor: NOGAMI Hidekatsu, Kyoto-shi Kyoto 600-8530 (JP)
(74) Representative: Kilian Kilian & Partner
(86) International application number: PCT/JP2009/065163
(87) International publication number: WO 2010/026939

(56) References cited:
- EP-A1- 1 729 366
- EP-A2- 1 724 714
- WO-A1-2006/049068
- WO-A1-2006/075398
- JP-A- 2001 101 365
- JP-A- 2005 191 705
- JP-A- 2006 264 760
- JP-A- 2007 028 002
- US-A1- 2006 208 901

## Description

### TECHNICAL FIELD

The present invention relates to RFID tags, RFID tag sets, and RFID systems, and particularly to an RFID tag suited for performing wireless communication with a metal object, an RFID tag set, and an RFID system.

### BACKGROUND ART

The RFID (Radio Frequency Identification) system is conventionally used to achieve efficiency in physical distribution management, commodity management and the like. The RFID system is configured by an RFID tag including an IC chip, and a reader or a reader/writer for performing wireless communication with the RFID tag. The RFID tag is used by being attached to various articles, but change may occur in the communication distance due to the influence of the attaching article. In particular, the communication distance is significantly shortened if the attaching article is a metal surface.

When carrying out physical distribution management, commodity management and the like by attaching the RFID tag to all the articles, the shape of the RFID is preferably a shape that does not have projections as much as possible and that is thin so as to be easily handled.

The Japanese unexamined Patent Publication No. 2007-243296 describes the RFID tag that satisfies the above request, that is, the RFID tag by which the communication distance is not shortened even if attached to a metal surface and that is thin and has few projections includes the RFID tag. The RFID tag "8" includes a dielectric substrate "1", a grounding conductive unit "2" arranged on one main surface of the dielectric substrate "1", a patch conductive unit "3" formed with a slot "4" arranged on the other main surface of the dielectric substrate "1", an electrical connection unit "5" extended inward from the respective opposing portions of the slot "4", and an IC chip "6" arranged inside the slot "4" and connected to the electrical connection unit "5" (the reference symbol in parentheses is the reference symbol used in patent document 1). In other words, the RFID tag "8" is an RFID tag that uses a patch antenna.

The above requests can be satisfied by using the patch antenna. However, the patch antenna has a high gain but has a very narrow frequency band. A so-called reverse L-shaped antenna is conventionally known as an antenna in which the frequency band is relatively broadband. The reverse L-shaped antenna is an antenna in which the middle of an element of a grounding type 1/4λ monopole antenna is bent at an angle of 90°, where the letter "L" of the alphabet can be seen upside down. The broadband can be achieved compared to the patch antenna by using the reverse L-shaped antenna, but it is difficult to cover all the usage frequencies of the RFID tag throughout the world of 860 MHz (EU: European Union) to 955 MHz (JP: Japan), and high gain is difficult to achieve compared to the patch antenna.

Moreover, document EP 1 729 366 A1 discloses a small radio frequency IC tag which can obtain sufficiently long communication distance with radio wave in the microwave band even if an antenna is made small and the radio frequency IC tag is embedded in metal material. An O-shaped antenna is formed to narrow the width of a neck part in which an IC chip is mounted and widen the width of radiating electrodes constituting radiating part of radio wave. The radiating electrodes are formed into offset structure on right and left sides of the feeding point so that areas of right and left radiating parts of the feeding point in which the IC chip is mounted are unsymmetrical. Further, a ground electrode is provided so that a dielectric body is held between the radiating electrodes and the ground electrode and the radiating electrode is connected to the ground electrode at the side of the dielectric body.

### DISCLOSURE OF THE INVENTION

### PROBLEMS TO BE SOLVED BY THE INVENTION

It is an object of the present invention to provide an RFID tag by which the communication distance is not shortened even when wireless communication is performed with a metal object and broadband and high gain are achieved, an RFID tag set, and an RFID system. This object is achieved by an RFID tag according to claim 1, an RFID tag set according to claim 7 and RFID systems according to claims 8 and 9. Advantageous embodiments of the invention are subject-matter of the dependent claims.

### MEANS FOR SOLVING THE PROBLEM

An RFID tag according to the present invention includes a grounding conductive plate; a first dielectric substrate stacked on one surface of the grounding conductive plate; an antenna section including a first antenna conductor and a second antenna conductor arranged on the first dielectric substrate; an IC chip for connecting the first antenna conductor and the second antenna conductor; a connecting portion for connecting either the first antenna conductor or the second antenna conductor and the grounding conductive plate; and a second dielectric substrate arranged on the other surface of the grounding conductive plate, wherein an electrical length of the antenna section and an electrical length of the grounding conductive plate are different.

The connecting portion may be a via or may be formed by bending one end side of the first antenna conductor.

The first antenna conductor and the second antenna conductor may differ in length.

The second antenna conductor may be formed to a meander shape.

The second antenna conductor may be formed with one end side folded back.

The grounding conductive plate may be formed to a meander shape.

An RFID tag set according to the present invention includes one of the RFID tag attached to an object, and a conductive plate connectable with the RFID tag, wherein the RFID tag set has the conductive plate being attached to the object while being interposed between the RFID tag and the object.

The RFID system according to the present invention includes one of the RFID tags described above, and a reader or a reader/writer that performs wireless communication with the RFID tag.

In accordance with still another aspect of the present invention, there is provided an RFID system including the RFID tag set, and a reader or a reader/writer that performs wireless communication with the RFID tag set.

### EFFECT OF THE INVENTION

As apparent from the description mad above, according to the present invention, the first antenna conductor and the second antenna conductor are arranged on the first dielectric substrate, and the grounding conductive plate is arranged between the first dielectric substrate and the second dielectric substrate. Thus, the communication distance is not shortened even when wireless communication is performed with a metal object, and broadband and high gain are achieved.

### BRIEF DESCRIPTION OF THE DRAWINGS

Fig. 1 is a schematic view showing an RFID system of the present invention.
Fig. 2 is a view describing an RFID tag according to a first embodiment of the present invention, where (a) is a plan view, (b) is a cross-sectional view taken along line A-A, and (c) is a perspective view.
Fig. 3 is a perspective view of an RFID tag according to a second embodiment of the present invention.
Fig. 4 is a perspective view of an RFID tag according to a third embodiment of the present invention.
Fig. 5 is a plan view showing another embodiment of an antenna section on the reverse L-shaped antenna side.
Fig. 6 is a plan view showing another embodiment of an antenna section on the reverse L-shaped antenna side.
Fig. 7 is a view describing another embodiment of an antenna section (grounding conductive plate) on the patch antenna side, where (a) Is a plan view showing the situation of the grounding conductive plate in the RFID tag, and (b) is a plan view of the grounding conductive plate.
Fig. 8 is a view describing an RFID tag set of the present invention, where (a) is a perspective view describing the structure of the RFID tag set, and (b) is a schematic view describing the usage state of the RFID tag set.
Fig. 9 is a cross-sectional view of an RFID tag using a reverse L-shaped antenna manufactured in the present invention to be compared with the RFID tag of the present invention.
Fig. 10 is a graph describing the effects of the RFID tag of the present invention.

### DESCRIPTION OF SYMBOLS

1,1A,1B,1C,1D,1E RFID tag
2, 20grounding conductive plate
3 first dielectric substrate
4 antenna section
4A, 40A first antenna conductor
4B, 40B, 400B second antenna conductor
5 second dielectric substrate
6 IC chip
7 via (connecting portion)
8 attachment hole
9 conductive plate
10 RFID tag set
100, 100A RFID system
L1 linear distance of antenna section
L2 length of installed conductive plate
M container
RW reader/writer

### BEST MODE FOR CARRYING OUT THE INVENTION

The embodiments of the present invention will be described below with reference to the drawings.

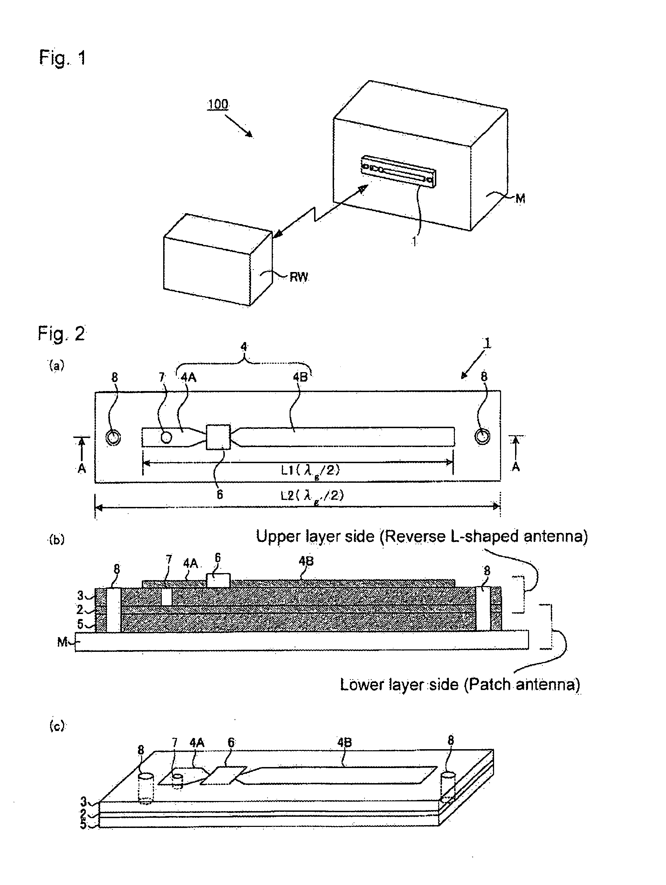

Fig. 1 is a schematic view showing an RFID system of the present invention, and Fig. 2 is a view describing an RFID tag according to a first embodiment of the present invention, where (a) is a plan view, (b) is a cross-sectional view taken along line A-A, and (c) is a perspective view.

First, the outline of an RFID system 100 of the present invention will be described with reference to Fig. 1. The RFID system 100 of the present invention includes an RFID tag 1 attached to a metal object M such as an iron and steel product, a die, a manufacturing equipment, and a reader/writer RW for performing read and write of information with the RFID tag 1 in a non-contact manner. The RFID system 100 attaches the RFID tag 1 to the iron and steel product that is difficult for humans to identify visually such as stainless steel so that picking and inspection of the target product can be carried out using a portable reader/writer RW, or the RFID system 100 attaches the RFID tag 1 to the die or the manufacturing equipment to perform actual article check in inventory clearance, usage, and the like.

In the RFID system 100 of the present invention, the reader/writer RW of portable type or fixed type can be applied, and the reader/writer RW may be a reader.

The configuration of the RFID tag 1 will be described below with reference to Fig. 2.

As shown in Fig. 2, the RFID tag 1 is configured by a grounding conductive plate 2, a first dielectric substrate 3, an antenna section 4, a second dielectric substrate 5, an IC chip 6, and a via 7.

The grounding conductive plate 2 is made of conductive material such as copper, aluminum, and stainless steel, where the first dielectric substrate 3 is stacked on the upper surface (one surface) of the grounding conductive substrate 2.

The first dielectric substrate 3 is formed to a plate shape from synthetic resin material such as polyethylene, polyethylene terephtalate (PET), polypropylene, polyimide, where the antenna section 4 is arranged on the upper surface of the first dielectric substrate 3.

The antenna section 4 is formed by metal punching processing of copper, aluminum, stainless steel, or the like, or by etching processing. The antenna section 4 includes a first antenna conductor 4A and a second antenna conductor 4B that are spaced apart, where the IC chip 6 is mounted between the first antenna conductor 4A and the second antenna conductor 4B so that the first antenna conductor 4A and the second antenna conductor 48 are connected by the IC chip 6. The first antenna conductor 4A and the grounding conductive plate 2 are electrically connected by the via 7. The first antenna conductor 4A is formed short and the second antenna conductor 4B is formed long but the first antenna conductor 4A and the second antenna conductor 4B may have the same length.

The second dielectric substrate 5 is formed to a plate shape from synthetic resin material such as polyethylene, polyethylene terephtalate (PET), polypropylene, polyimide, and is arranged on the lower surface (other surface) of the grounding conductive plate 2.

As shown in Fig. 2(a), a linear distance L1 of the antenna section is suitably set to λ_{g}/2 with respect to the execution wavetength = λ_{g} of high frequency, and a length L2 of the grounding conductive plate 2 is suitably set to λ_{g}/2 with respect to the execution wavelength = λ_{g} of low frequency. Here, the L1 is the electrical length of the antenna section 4 and L2 is the electrical length of the grounding conductive plate 2.

As shown in Fig. 2(a), an attachment hole 8, 8 for inserting a screw (not shown) to screw-fix the RFID tag 1 to the metal object M is perforated near both ends of the RFID tag 1. In the present embodiment, the RFID tad is a screw-fixing type, but is not limited thereto, and may be a laminating type, a type of attaching with a banding band, and the like.

As shown in Fig. 1, the inventors of the present invention conducted a simulation to examine the generation state of the electric field on the low frequency side and the high frequency side of the RFID tag 1 with the RFID tag 1 having the above configuration attached to the metal object M. In the present simulation, the electrical intensity on the high frequency side is set to 1 GHz with the electric intensity on the low frequency side set at 900 MHz. As shown in Fig. 2(b) (illustration of metal object M is omitted in Fig. 2(b)), the RFID tag 1 operates in the following manner.

In the high frequency side, the upper layer side, that is, the portion including the antenna section 4, the first dielectric substrate 3, and the grounding conductive substrate 2 serves as a so-called reverse L-shaped antenna, and the electric field is radiated with such reverse L-shaped antenna as the center. In the low frequency side, on the other hand, the lower layer side, that is, the portion including the grounding conductive plate 2, the second dielectric substrate 5, and the metal object M serves as a so-called patch antenna, and the electric field is radiated with such patch antenna as the center.

When configured as the RFID tag 1 as a result to the simulation, it was found that broadband can be ensured, and higher gain can be realized at the same time while the grounding conductive plate 2 can function as a radiation element.

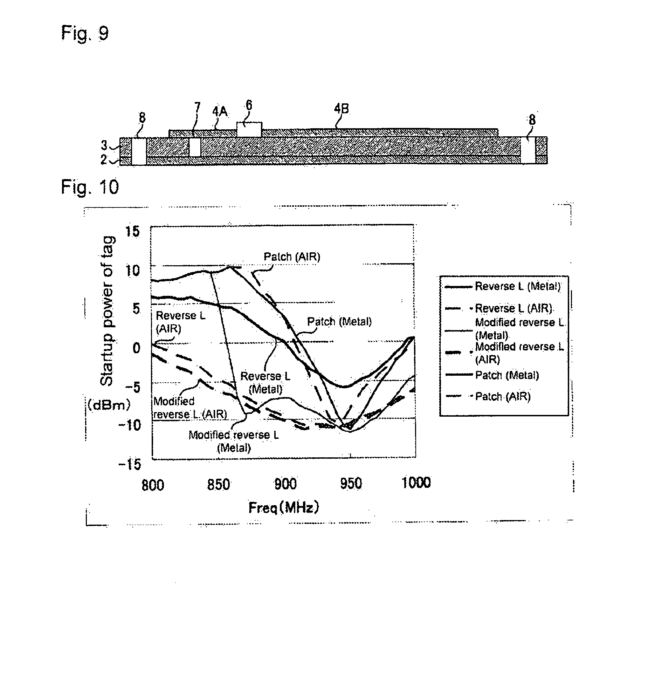

The inventors of the present invention performed the simulation to compare the broadband properties using the RFID tag using the patch antenna known from the prior art, the RFID tag (see Fig. 9) using the reverse L-shaped antenna manufactured by the inventors of the present invention to compare with the RFID tag 1 according to the present invention, and the RFID tag according to the present invention. The graph of Fig. 10 shows the result.

In Fig. 10, the horizontal axis indicates the frequency (MHz) and the vertical axis indicates the startup power (dBm), where long distance communication is possible with lower startup power. In Fig. 10, AIR is for a case where the RFID tag is attached to an object other than the metal object or is not attached, and Metal is for a case where the RFID tag is attached to the metal object. Reverse L indicates the RFID tag using the reverse L-shaped antenna shown in Fig. 9, patch indicates the RFID tag using the patch antenna, and modified reverse L indicates the RFID tag 1 according to the present invention. For instance, the modified reverse L (AIR) refers to a case where the RFID tag 1 according to the present invention is attached to an object other than the metal object or is not attached (such state is hereinafter referred to as "in air"), and modified reverse L (Metal) refers to a case where the RFID tag 1 according to the present invention is attached to the metal object.

As apparent from the result, the band property of the same extent as the RFID tag using the reverse L-shaped antenna is obtained in air, and high gain of the same extent as the RFID tag using the patch antenna is obtained when attaching the RFID tag to the metal object. In other words, in the RFID tag 1 according to the present invention, the functions of both the reverse L-shaped antenna and the patch antenna are obtained, long distance communication can be enabled over a wide frequency and broadband is achieved according to the configuration described above, so that long distance communication can be available at the frequency of each country including the attachment to the metal surface.

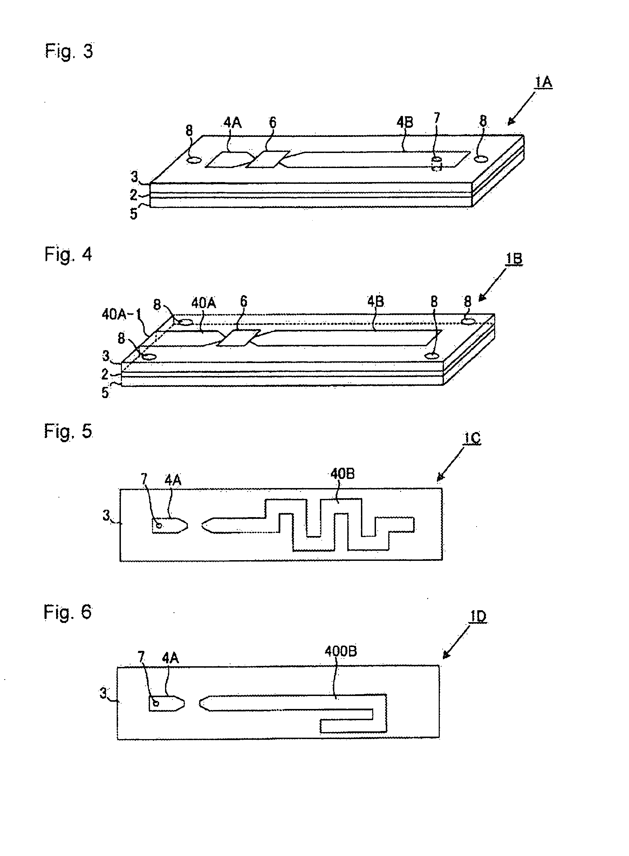

Other embodiments of the present invention will be described below with reference to Fig. 3 to Fig. 7. The description will be made giving importance on the difference with the RFID tag 1 according to the first embodiment, where the same reference numerals are denoted for the same configurations and the detailed description thereof will be omitted.

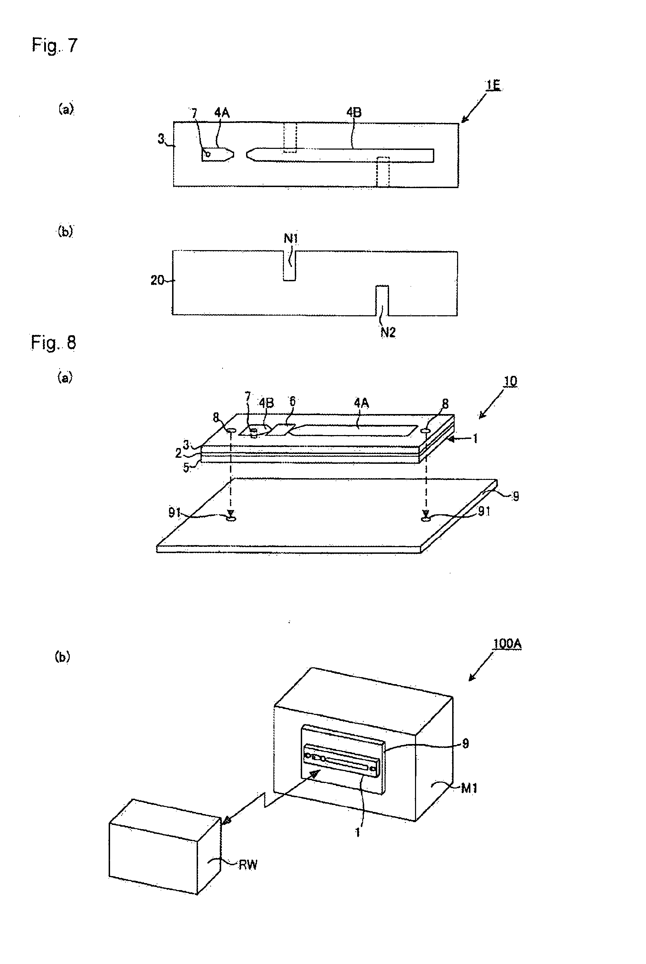

Fig. 3 is a perspective view of an RFID tag according to a second embodiment of the present invention, Fig. 4 is a perspective view of an RFID tag according to a third embodiment of the present invention, Fig. 5 is a plan view showing another embodiment of an antenna section on the reverse L-shaped antenna side, Fig. 6 is a plan view showing another embodiment of an antenna section on the reverse L-shaped antenna side, and Fig. 7 is a view describing another embodiment of an antenna section (grounding conductive plate) on the patch antenna side, where (a) is a plan view showing the situation of the grounding conductive plate in the RFID tag, and (b) is a plan view of the grounding conductive plate.

### <Second embodiment>

An RFID tag 1A according to a second embodiment has a configuration in which the position of the via 7 moves to the second antenna conductor 48 side to connect with the grounding conductive plate 2 through the via 7 in the RFID tag 1 according to the first embodiment. Other configurations are similar to the RFID tag 1.

### <Third embodiment

An RFI D tag1 B according to a third embodiment connects a first antenna conductor 40A and the grounding conductive plate 2 by bending one end 40A-1A side of the first antenna conductor 40A for forming the RFID tag 1B rather than connecting the antenna section 4 and the grounding conductive plate 2 through the via 7 as in the RFID tag 1 according to the first embodiment. Such configuration can be realized by processing in the following manner. For instance, one sheet of conductive plate is bent to a square shape (horseshoe shape). In this case, the first dielectric substrate 3 is to be taken in towards the inner side. The upper surface of the first dielectric substrate 3 is subjected to etching process in such state, so that the first antenna conductor 40A and the second antenna conductor 4B are formed. In such configuration, the attachment hole 8 for attaching the RFID tag 1B to the metal object M is preferably formed on the four sides of the RFID tag 1B as shown in Fig. 4.

### <Fourth embodiment to sixth embodiment>

Briefly describing the configuration of an RFID tag according to a fourth embodiment to a sixth embodiment, the shape of the RFID tags 1C, 1D according to the fourth embodiment and the fifth embodiment is made by structurally changing the antenna section 4 of the RFID tag 1, and the shape of the RFID tag 1 E according to the fifth embodiment is made by structurally changing the grounding conductive plate 2 of the RFID tag 1. The illustration is simplified in Fig. 5 to Fig. 7 from the purpose that the difference merely needs to be clarified.

Specifically describing, the RFID tag 1C differs from the configuration of the RFID tag in that the second antenna conductor 40B in which the shape of the second antenna conductor is formed to a meander shape as shown in Fig. 5 is used. The RFID tag 1D, on the other hand, differs from the configuration of the RFID tag 1 in that the second antenna conductor 400B in which the shape of the second antenna conductor is formed by bending the end side to a square in a hairpin shape is used. Other configurations are similar to the RFID tag 1. The entire RFID tag can be miniaturized by forming in such manner.

The RFID tag 1E differs from the configuration of the RFID tag 1 in that the grounding conductive plate 20 in which the entire grounding conductive plate is formed to a meander shape by forming notches N1, N2 as shown in Fig. 7(b) in the shape of the grounding conductive plate 2 is used. Other configurations are similar to the RFID tag 1. The entire RFID tag can be miniaturized by forming in such manner.

The RFID tag may be manufactured using both the antenna section (portion including 4A and 40B) shown in Fig. 5 and the grounding conductive plate 20 shown in fig. 7(b). The RFID tag can be further miniaturized in such manner.

The configuration of the RFID tag according to the present invention will be described with reference to Fig. 8.

Fig. 8 is a view describing an RFID tag set of the present invention, where (a) is a perspective view describing the structure of the RFID tag set, and (b) is a schematic view describing the usage state of the RFID tag set.

In conclusion, the RFID tag set 10 of the present invention has a configuration in which a conductive plate 9 is arranged in advance in the RFID tag according to the first embodiment to the fifth embodiment described above. In other words, in all the RFID tags according to the first embodiment to the fifth embodiment, the metal surface of the metal object M that is the attaching target functions as a grounding conductor on the patch antenna side so that the function similar to the patch antenna can be exhibited on the lower layer side. However, in the RFID tag set 10 according to the present embodiment, the functions of both the reverse L-shaped antenna and the patch antenna can be exhibited on a constant basis irrespective of the attribute (whether a metal object or not) of the attaching target by configuring the conductive plate 9 to be detachable with one of the RFID tag according to the first embodiment to the fifth embodiment in advance.

Such RFID tag set 10 includes the RFID tag 1 described above, and the conductive plate 9 perforated with two attachment holes 91, 91 in correspondence with the positions of the two attachment holes 8, 8 of the RFID tag 1. As shown in Figs. 8(a), 8(b), the conductive plate 9 is attached by a screw (not illustrated) so as to be interposed between the RFID tag 1 and the object M1 with the two attachment holes 91, 91 aligned with the positions of the two attachment holes 8, 8. An RFID system 10A, which is a system similar to the RFID system 100, can be operated even by using the RFID tag 10.

Since the conductive plate 9 functions as the grounding conductor of the patch antenna, the communication between the RFID tag 1 and the reader/writer RW stabilizes if formed large compared to the size of the RFID tag 1.

## Claims

1. An RFID tag (1;1A;1B; 1C; 1D; 1E) comprising:
a grounding conductive plate (2; 20);
a first dielectric substrate (3) stacked on one surface of the grounding conductive plate (2; 20);
an antenna section (4) including a first antenna conductor (A4; 40A) and a second antenna conductor (4B; 408; 400B) arranged on the first dielectric substrate (3);
an IC chip (6) for connecting the first antenna conductor (4A; 40A) and the second antenna conductor (4B; 40B; 400B);
a connecting portion (7) for connecting either the first antenna conductor (4A; 40A) or the second antenna (4B; 40B; 400B) conductor and the grounding conductive plate (2; 20); and
a second dielectric substrate (5) arranged on the other surface of the grounding conductive plate (2; 20), wherein
an electrical length (L1) of the antenna section (4) and an electrical length (L2) of the grounding conductive plate (2; 20) are different.

2. The RFID tag (1; 1A; 1B; 1C; 1D; 1E) according to claim 1, wherein the connecting portion (7) is a via or is formed by bending one end side of the first antenna conductor (4A; 40A).

3. The RFID tag (1; 1A; 1B; 1C; 1D; 1E) according to claim 1, wherein the first antenna conductor (4A; 40A) and the second antenna conductor (4B; 40B; 400B) differ in length.

4. The RFID tag (1C) according to claim 1, wherein the second antenna (40B) conductor is formed to a meander shape.

5. The RFID tag (1D) according to claim 1, wherein the second antenna conductor (400B) is formed with one end side folded back.

6. The RFID tag (1E) according to claim 1, wherein the grounding conductive plate (20) is formed to a meander shape.

7. An RFID tag set (10) comprising the RFID tag (1; 1A; 1B; 1C; 1D; 1E) according to claim 1 attached to an object (M), and a conductive plate (9) connectable with the RFID tag (1; 1A; 1B; 1C; 1D; 1E), wherein
the RFID tag set (10) has the conductive plate (9) being attached to the object (M) while being interposed between the RFID tag (1; 1A; 1B; 1C; 1D; 1E) and the object (M).

8. An RFID system (100) comprising the RFID tag (1; 1A; 1B; 1C; 1D; 1E) according to claim 1, and a reader or a reader/writer (RW) that performs wireless communication with the RFID tag (1; 1A; 1B; 1C; 1D; 1E).

9. An RFID system (100A) comprising the RFID tag set (10) according to claim 7, and a reader or a reader/writer (RW) that performs wireless communication with the RFID tag set (10).

## Patentansprüche

1. RFID-Tag (1; 1A; 1B; 1C; 1D; 1E), aufweisend:
eine leitende Masseplatte (2; 20);
ein erstes dielektrisches Substrat (3), das auf eine Fläche der leitenden Masseplatte (2; 20) gelegt ist;
einen Antennenabschnitt (4) mit einem ersten Antennenleiter (4A; 40A) und einem zweiten Antennenleiter (4B; 40B; 400B), die auf dem ersten dielektrischen Substrat (3) angeordnet sind;
einen Mikrochip (6) zum Verbinden des ersten Antennenleiters (4A; 40A) und des zweiten Antennenleiters (4B; 40B; 400B);
einen Verbindungsabschnitt (7) zum Verbinden entweder des ersten Antennenleiters (4A; 40A) oder des zweiten Antennenleiters (4B; 40B; 400B) und der leitenden Masseplatte (2; 20); und
ein zweites dielektrisches Substrat (5), das auf die andere Fläche der leitenden Masseplatte (2; 20) gelegt ist, wobei
eine elektrische Länge (L1) des Antennenabschnitts (4) und eine elektrische Länge (L2) der leitenden Masseplatte (2; 20) unterschiedlich sind.

2. RFID-Tag (1; 1A; 1B; 1C; 1D; 1E) gemäß Anspruch 1, wobei der Verbindungsabschnitt (7) eine Durchkontaktierung ist oder durch Biegen einer Endseite des ersten Antennenleiters (4A; 40A) ausgebildet wird.

3. RFID-Tag (1; 1A; 1B; 1C; 1D; 1E) gemäß Anspruch 1, wobei sich der erste Antennenleiter (4A; 40A) und der zweite Antennenleiter (4B; 40B; 400B) in der Länge unterscheiden.

4. RFID-Tag (1C) gemäß Anspruch 1, wobei der zweite Antennenleiter (40B) eine labyrinthförmige Gestalt hat.

5. RFID-Tag (1D) gemäß Anspruch 1, wobei der zweite Antennenleiter (400B) mit einer Endseite zurückgefaltet ausgebildet ist.

6. RFID-Tag (1E) gemäß Anspruch 1, wobei die leitende Masseplatte (20) eine labyrinthförmige Gestalt hat.

7. RFID-Tagsatz (10) mit dem RFID-Tag (1; 1A; 1B; 1C; 1D; 1E) gemäß Anspruch 1, der an einem Objekt (M) angebracht ist, und einer leitenden Platte (9), die mit dem RFID-Tag (1; 1A; 1B; 1C; 1D; 1E) verbindbar ist, wobei
der RFID-Tagsatz (10) die leitende Platte (9) hat, die an dem Objekt (M) angebracht und gleichzeitig zwischen dem RFID-Tag (1; 1A; 1B;1C; 1D; 1E) und dem Objekt (M) angeordnet ist.

8. RFID-System (100) mit dem RFID-Tag (1; 1A; 1B; 1C; 1D; 1E) gemäß Anspruch 1 und einer Leseeinrichtung oder einer Lese/Schreibeinrichtung (RW), die eine drahtlose Kommunikation mit dem RFID-Tag (1; 1A; 1B, 1C; 1D; 1E;) durchführt.

9. RFID-System (100A) mit dem RFID-Tagsatz (10) gemäß Anspruch 7 und einer Leseeinrichtung oder einer Lese/Schreibeinrichtung (RW), die eine drahtlose Kommunikation mit dem RFID-Tagsatz (10) durchführt.

## Revendications

1. Étiquette RFID (1 ; 1A ; 1B ; 1C ; 1D ; 1E) comprenant :
une plaque conductrice de mise à la masse (2 ; 20) ;
un premier substrat diélectrique (3) empilé sur une surface de la plaque conductrice de mise à la masse (2 ; 20) ;
une section d'antenne (4) comprenant un premier conducteur d'antenne (4A ; 40A) et un second conducteur d'antenne (4B ; 40B ; 400B) agencé sur le premier substrat diélectrique (3) ;
une puce de circuit intégré (6) permettant de connecter le premier conducteur d'antenne (4A ; 40A) et le second conducteur d'antenne (4B ; 40B ; 4008) ;
une portion de connexion (7) permettant de connecter soit le premier conducteur d'antenne (4A ; 40A), soit le second conducteur d'antenne (4B ; 40B ; 400B) et la plaque conductrice de mise à la masse (2 ; 20) ; et
un second substrat diélectrique (5) agencé sur l'autre surface de la plaque conductrice de mise à la masse (2 ; 20), dans laquelle
une longueur électrique (L1) de la section d'antenne (4) et une longueur électrique (L2) de la plaque conductrice de mise à la masse (2 ; 20) sont différentes.

2. Étiquette RFID (1 ; 1A ; 1B ; 1C ; 1D ; 1E) selon la revendication 1, dans laquelle la portion de connexion (7) est un trou d'interconnexion ou est formée en courbant une extrémité du premier conducteur d'antenne (4A ; 40A).

3. Étiquette RFID (1 ; 1A ; 1B ; 1C ; 1D ; 1E) selon la revendication 1, dans laquelle le premier conducteur d'antenne (4A ; 40A) et le second conducteur d'antenne (4B ; 40B ; 400B) ont une longueur différente.

4. Étiquette RFID (1C) selon la revendication 1, dans laquelle le second conducteur d'antenne (40B) a la forme d'un méandre.

5. Étiquette RFID (1D) selon la revendication 1, dans laquelle le second conducteur d'antenne (400B) est formé avec une extrémité repliée.

6. Étiquette RFID (1E) selon la revendication 1, dans laquelle la plaque conductrice de mise à la masse (20) a la forme d'un méandre.

7. Ensemble pour étiquette RFID (10) comprenant l'étiquette RFID (1 ; 1A ; 1B ; 1C ; 1D ; 1E) selon la revendication 1 attachée à un objet (M), et une plaque conductrice (9) pouvant être connectée avec l'étiquette RFID (1 ; 1A ; 1B ; pour étiquette ; 1D ; 1E), dans lequel
l'ensemble d'étiquette RFID (10) a la plaque conductrice (9) attachée à l'objet (M) tout en étant intercalée entre l'étiquette RFID (1 ; 1A ; 1B ; 1C ; 1D ; 1E) et l'objet (M).

8. Système RFID (100) comprenant l'étiquette RFID (1 ; 1A ; 1B ; 1C ; 1D ; 1E) selon la revendication 1, et un lecteur ou un lecteur/scripteur (RW) qui réalise une communication sans fil avec l'étiquette RFID (1 ; 1A ; 1B ; 1C ; 1D ; 1E).

9. Système RFID (100A) comprenant l'ensemble pour étiquette RFID (10) selon la revendication 7, et un lecteur ou un lecteur/scripteur (RW) qui réalise une connexion sans fil avec l'ensemble pour étiquette RFID (10).
